# EUROPÄISCHE PATENTANMELDUNG

(11) **EP 4 703 657 A1**
(43) Veröffentlichungstag der Anmeldung: **04.03.2026**
(21) Anmeldenummer: 24197577.0
(22) Anmeldetag: 30.08.2024
(51) Int. Cl.: F24S 50/40, F24S 50/80, F24S 20/63, E06B 7/10, E06B 9/264

(54) **FENSTERMODUL ZUR THERMISCHEN REGULIERUNG EINES GEBÄUDES**

(71) Anmelder: HyWin GmbH, 5506 Mägenwil (CH)
(72) Erfinder: BAUER, Dennis, 74395 Mundelsheim (DE); KÄCHELE, Marlon, 89284 Pfaffenhofen an der Roth (DE); LIPTON, Jan, 8816 Hirzel (CH); MEISSER, Claudio, 6330 Cham (CH); PURKART, Philipp, 89264 Weissenhorn (DE)
(74) Vertreter: Fink Numrich Patentanwälte PartmbB

(57) **Zusammenfassung**

Es wird ein Fenstermodul (1) zur thermischen Regulierung eines Gebäudes beschrieben, mit dem das Gebäude beheizt oder gekühlt werden kann. Dieses umfasst eine Außenverglasung (2) und eine Innenverglasung (3). Die Außenverglasung (2) weist einen kleineren Wärmedurchgangskoeffizient (Uₐ) als die Innenverglasung (3) auf, um über die Innenverglasung (3) das Gebäudeinnere thermisch zu regulieren. Ein Luft-Flüssigkeit-Wärmetauscher (5) umfasst ein fluiddurchströmtes Kühl-/Heizelement mit einer Fluidleitung, in der ein Wärmetransportmedium geführt ist. Der Wärmetauscher (5) ist im Einbauzustand des Fenstermoduls (1) unten oder oben, horizontal liegend, in dem Zwischenraum (4) angeordnet ist, so dass er von Luft aus dem Zwischenraum (4) durchströmbar ist. Ein Lüfter (10) ist im Einbauzustand des Fenstermoduls (1) oben oder unten, horizontal liegend, in dem Zwischenraum (4) angeordnet, wobei durch den Lüfter (10) Luft durch den Wärmetauscher (5) geführt wird, um Wärme zwischen der Luft und dem Wärmetransportmedium auszutauschen und um die Luft in dem Zwischenraum (4) in einem Kreislauf zu führen. Ein in dem Zwischenraum (4) angeordnetes Trennelement (19) unterteilt den Zwischenraum (4) in einen inneren Zwischenraum (4I) und einen äußeren Zwischenraum (4A), um eine steigende und eine fallende Luftströmung in dem Zwischenraum (4) zu erzeugen. Eine steuerbar verstellbare Sonnenschutzvorrichtung (11) dient als Sonnenschutzfunktion, die in dem äußeren Zwischenraum (4A) angeordnet ist und an die Außenverglasung (2) grenzt, so dass bei aktivierter Sonnenschutzfunktion der äußere Zwischenraum (4A) vollständig oder im Wesentlichen zwischen der Sonnenschutzvorrichtung (11) und dem Trennelement (19) gebildet ist.

## Beschreibung

Die Erfindung betrifft ein Fenstermodul zur thermischen Regulierung, umfassend ein Beheizen oder Kühlen, eines Gebäudes.

Ein Fenstermodul zur thermischen Regulierung, welches ein Beheizen oder Kühlen eines Gebäudes ermöglicht, ist beispielsweise aus der EP 3 320 275 B1 bekannt. Das dort beschriebene Fenstermodul umfasst eine Außenverglasung und eine Innenverglasung. Die Außenverglasung weist einen kleineren Wärmedurchgangskoeffizient als die Innenverglasung auf, um über die Innenverglasung das Gebäudeinnere thermisch zu regulieren. Zwischen der Außenverglasung und der Innenverglasung ist ein gegenüber Feststoffen, insbesondere Staub, abgedichteter Zwischenraum gebildet. In dem Zwischenraum ist ein Luft-Flüssigkeit-Wärmetauscher angeordnet. Der Luft-Flüssigkeit-Wärmetauscher umfasst ein fluiddurchströmtes Kühl-/Heizelement mit einer Fluidleitung, in der ein Wärmetransportmedium geführt ist. Der Luft-Flüssigkeit-Wärmetauscher ist im Einbauzustand des Fenstermoduls unten oder oben, horizontal liegend, in dem Zwischenraum angeordnet, so dass er von Luft aus dem Zwischenraum durchströmbar ist. Ein Lüfter des Fenstermoduls ist im Einbauzustand des Fenstermoduls oben oder unten, horizontal liegend, in dem Zwischenraum angeordnet. Dieser ist in einem Kühlbetrieb und in einem Heizbetrieb als Betriebsmodi des Fenstermoduls betreibbar, wobei zumindest in dem Kühlbetrieb durch den Lüfter Luft durch den Luft-Flüssigkeit-Wärmetauscher geführt wird, um Wärme zwischen der Luft und dem Wärmetransportmedium auszutauschen und um die Luft in dem Zwischenraum in einem Kreislauf zu führen. Weiter umfasst das Fenstermodul ein in dem Zwischenraum angeordnetes Trennelement, das parallel zu der Außenverglasung und der Innenverglasung verläuft und den Zwischenraum in einen inneren Zwischenraum und einen äußeren Zwischenraum unterteilt, um eine steigende und eine fallende Luftströmung in dem Zwischenraum zu erzeugen.

Es ist Aufgabe der Erfindung, ein Fenstermodul anzugeben, das baulich und/oder funktional verbessert ist und eine erhöhte Effizienz bei der thermischen Regulierung eines Gebäudes ermöglicht.

Es ist ferner Aufgabe der Erfindung, ein Verfahren anzugeben, welches eine verbesserte thermische Regulierung eines Gebäudes mittels eines Fenstermoduls erlaubt.

Es ist weitere Aufgabe der Erfindung, ein Kühl- und Heizsystem für Gebäude mit einem Fenstermodul anzugeben, welches auf einfache Weise eine verbesserte thermische Regulierung des Gebäudes ermöglicht.

Diese Aufgaben werden gelöst durch ein Fenstermodul gemäß den Merkmalen des Anspruches 1, ein Verfahren gemäß den Merkmalen des Anspruches 22 und ein Kühl- und Heizsystem gemäß den Merkmalen des Patentanspruches 23. Vorteilhafte Ausgestaltungen finden sich in den abhängigen Patentansprüchen.

Gemäß einem ersten Aspekt wird zur Lösung ein Fenstermodul vorgeschlagen, das auf dem Konstruktionsprinzip der eingangs genannten EP 3 320 275 B1 basiert. Das Fenstermodul zur thermischen Regulierung, welche ein Beheizen oder Kühlen eines Gebäudes ermöglicht, umfasst eine Außenverglasung und eine Innenverglasung, wobei die Außenverglasung einen kleineren Wärmedurchgangskoeffizient als die Innenverglasung aufweist, um über die Innenverglasung das Gebäudeinnere thermisch zu regulieren, und wobei zwischen der Außenverglasung und der Innenverglasung ein gegenüber Feststoffen, insbesondere Staub, abgedichteter Zwischenraum gebildet ist. Das Fenstermodul umfasst weiter einen Luft-Flüssigkeit-Wärmetauscher, der ein fluiddurchströmtes Kühl-/Heizelement mit einer Fluidleitung, in der ein Wärmetransportmedium geführt ist, umfasst, wobei der zumindest eine Luft-Flüssigkeit-Wärmetauscher im Einbauzustand des Fenstermoduls unten oder oben, horizontal liegend, in dem Zwischenraum angeordnet ist, sodass er von Luft aus dem Zwischenraum durchströmbar ist. Das Fenstermodul umfasst ferner einen Lüfter, der im Einbauzustand des Fenstermoduls oben oder unten, horizontal liegend, in dem Zwischenraum angeordnet ist und der in einem Kühlbetrieb und in einem Heizbetrieb als Betriebsmodi des Fenstermoduls betreibbar ist, wobei zumindest in dem Kühlbetrieb durch den Lüfter Luft durch den Luft-Flüssigkeit-Wärmetauscher geführt wird, um Wärme zwischen der Luft und dem Wärmetransportmedium auszutauschen und um die Luft in dem Zwischenraum in einem Kreislauf zu führen. Das Fenstermodul umfasst schließlich ein in dem Zwischenraum angeordnetes Trennelement, das parallel zu der Außenverglasung und der Innenverglasung verläuft und den Zwischenraum in einen inneren Zwischenraum und einen äußeren Zwischenraum unterteilt, um eine steigende und eine fallende Luftströmung in dem Zwischenraum zu erzeugen. Das Fenstermodul umfasst weiter eine steuerbar verstellbare Sonnenschutzvorrichtung als Sonnenschutzfunktion, die in dem äußeren Zwischenraum angeordnet ist und, insbesondere unmittelbar, an die Außenverglasung grenzt, so dass bei aktivierter Sonnenschutzfunktion der äußere Zwischenraum vollständig oder im Wesentlichen zwischen der Sonnenschutzvorrichtung und dem Trennelement gebildet ist.

Das dem vorgeschlagenen Fenstermodul zu Grunde liegende Prinzip besteht darin, Wärme zwischen der Luft in dem Zwischenraum und dem Wärmetransportmedium, das in dem Luft-Flüssigkeit-Wärmetauscher strömt, auszutauschen. Je nach Temperatur des Wärmetransportmediums kann die Luft dann gekühlt oder erwärmt werden. Mit der gekühlten oder erwärmten Luft kann über die Innenverglasung das Gebäudeinnere, nachfolgend auch als konditionierter Nutzraum bezeichnet, thermisch reguliert werden.

Die Außenverglasung stellt eine hochisolierende Verglasung dar, die das Fenstermodul und das Gebäudeinnere gegenüber der Außenumgebung isoliert. Demgegenüber ist die Innenverglasung eine einfache Verglasung oder eine Sicherheitsverglasung, da aufgrund der kontrollierten Temperatur in dem Zwischenraum des Fenstermoduls kleine Wärmemengen abgegeben oder aufgenommen werden. Dadurch, dass die Au-ßenverglasung die hochisolierende Verglasung ist, ermöglicht das Fenstermodul die thermische Regulierung des Gebäudes. Der Unterschied zwischen dem Wärmedurchgangskoeffizienten Uₐ der Außenverglasung und Uᵢ der Innenverglasung kann, je nachdem, ob das Fenstermodul nur zum Kühlen oder auch zum Heizen verwendet werden soll, mindestens um den Faktor 3, insbesondere um den Faktor 5 oder mehr, kleiner als der Wärmedurchgangskoeffizient Uᵢ der Innenverglasung sein.

Beispielsweise kann die Außenverglasung (z.B. als Mehrfachverglasung) einen U_{g}-Wert von 0, 6 W/m²K haben. Die Innenverglasung hat typischerweise einen U-Wert von ca. 5, 8 W/m²K. Hieraus ergibt sich ein Faktor 10, um den der Wärmedurchgangskoeffizient Uᵢ der Innenverglasung größer ist als der Wärmedurchgangskoeffizient Uₐ der Außenverglasung. Es versteht sich, dass bei der Verwendung anderer Verglasungen, andere U-Werte zur Anwendung kommen.

Die Funktion des Trennelements besteht darin, den Zwischenraum in den inneren Zwischenraum und den äußeren Zwischenraum unterteilen zu können, um eine steigende und eine fallende Luftströmung in dem Zwischenraum zu ermöglichen. Die Sonnenschutzfunktion dient dazu, die Einstrahlung von Sonnenlicht in das Gebäudeinnere zu regulieren, indem das Maß der Überdeckung mit dem Fensterlicht automatisch oder durch einen Nutzer eingestellt wird, wodurch die Tageslichtstärke in dem konditionierten Nutzraum einstellbar ist.

Wird das Fenstermodul von der Sonne bestrahlt, so werden die in dem Zwischenraum angeordneten Komponenten, wie Rahmenelemente des Fenstermoduls, durch die Sonneneinstrahlung erwärmt, wodurch Wärme an die Luft insbesondere in dem äußeren Zwischenraum des Fenstermoduls abgegeben wird. Der Wärmeeintrag kann durch die Sonnenschutzfunktion reguliert werden. Die erwärmte Luft im äußeren Zwischenraum des Fenstermoduls wird mit Hilfe des Lüfters in dem Zwischenraum des Fenstermoduls in einem Kreislauf geführt, wobei die erwärmte Luft durch den Luft-Flüssigkeit-Wärmetauscher geführt wird. Über den Luft-Flüssigkeit-Wärmetauscher wird Wärme an das Wärmetransportmedium des Luft-Flüssigkeit-Wärmetauschers abgegeben, wodurch kalte bzw. kältere Luft in den inneren Zwischenraum gelangt. Durch das Wärmetransportmedium wird die durch Sonnenstrahlung in dem Zwischenraum des Fenstermoduls erzeugte Wärme abgeführt. Wird die Temperatur der Luft in dem inneren Zwischenraum unter die Temperatur des Gebäudeinneren gebracht, so kann das Gebäudeinnere gekühlt werden. Durch den Lüfter wird die Luft dann wieder von dem inneren Zwischenraum in den äußeren Zwischenraum transportiert.

Soll demgegenüber das Gebäudeinnere erwärmt werden, so wird die von dem äußeren Zwischenraum in den Luft-Flüssigkeit-Wärmetauscher einströmende Luft über das Wärmetransportmedium erwärmt, wodurch wärmere Luft in den inneren Zwischenraum gelangt. Wird die Temperatur der Luft des inneren Zwischenraums über die Temperatur des Gebäudeinneren gebracht, so kann das Gebäudeinnere beheizt werden.

Die Richtung, in der die Luft in dem Zwischenraum in dem Kreislauf geführt wird, ist dabei sowohl im Kühlbetrieb als auch dem Heizbetrieb gleich. Dies bedeutet, der Lüfter braucht seine Drehrichtung nicht zu ändern. Dadurch braucht auch kein technisch aufwendiger Lüfter bereitgestellt zu werden, da der Lufttransport, unabhängig vom Betriebsmodus des Fenstermoduls, immer in der gleichen Richtung erfolgt.

Dadurch, dass der Zwischenraum lediglich gegenüber Feststoffen, insbesondere Staub, abgedichtet zu sein braucht, ansonsten jedoch gegenüber dem Nutzraum diffusionsoffen ist, entfällt die Zuführung von getrockneter Luft zur Vermeidung von Kondensation im Zwischenraum des Fenstermoduls. Dies vereinfacht den konstruktiven Aufbau des Fenstermoduls und spart beträchtliche Kosten für die Bereitstellung von getrockneter Luft mit geringem Überdruck.

Dadurch, dass die steuerbar verstellbare Sonnenschutzvorrichtung, insbesondere unmittelbar (d.h. ohne oder ohne wesentlichen Zwischenraum), an die Außenverglasung angrenzt, so dass bei aktivierter Sonnenschutzfunktion der äußere Zwischenraum vollständig oder im Wesentlichen zwischen der Sonnenschutzvorrichtung und dem Trennelement gebildet ist, ergibt sich in dem Zwischenraum eine weniger turbulente Strömung der Luft. Aufgrund einer optimierten Strömung ergeben sich geringere Vibrationen und eine geringere mechanische Beanspruchung der in dem Zwischenraum angeordneten Komponenten des Fenstermoduls. Darüber hinaus kann das Fenstermodul mit höherer Effizienz und geringerer Geräuschentwicklung betrieben werden. Durch das Angrenzen der Sonnenschutzvorrichtung an die Außenverglasung wird zudem, falls die Sonnenschutzvorrichtung aktiviert ist, ein geringerer Wärmeeintrag in den (äußeren) Zwischenraum des Fenstermoduls bewirkt.

Gemäß einer zweckmäßigen Ausgestaltung ist der zwischen der Außenverglasung und der Innenverglasung gebildete Zwischenraum größer als 150 mm, um ein ausreichendes Volumen an Luft in dem Zwischenraum in einem Kreislauf führen zu können. Der zwischen der Innenverglasung und der Außenverglasung gebildete Abstand wird insbesondere abhängig vom Typ (insbesondere Leistungsklasse) des Luft-Flüssigkeit-Wärmetauschers sowie seiner Einbaulage gewählt und kann auch größer oder wesentlich größer als die genannten 150 mm sein.

Gemäß einer weiteren zweckmäßigen Ausgestaltung wird durch das Trennelement der aus dem Wärmetauscher austretende Luftstrom in den inneren Zwischenraum geführt, um über den äußeren Zwischenraum zurückgeführt zu werden. Da die Innenverglasung einen größeren Wärmedurchgangskoeffizient als die Außenverglasung aufweist, kann aufgrund der kontrollierten Temperatur in dem Zwischenraum des Fenstermoduls ein erwünschtes Maß an Wärme oder Kälte zum Nutzraum hin abgegeben werden.

Gemäß einer weiteren zweckmäßigen Ausgestaltung ist die Sonnenschutzvorrichtung aus einem Sonnenstrahlung absorbierenden und reflektierenden Material ausgebildet, die derart steuerbar verstellbar ist, dass die Tageslichtstärke im Nutzraum einstellbar ist. Die Sonnenschutzvorrichtung kann beispielsweise als Rollo, Doppelrollo, Jalousie, textiler Vorhang und dergleichen ausgeführt sein. Die Sonnenschutzvorrichtung kann auch als schaltbares Glas in die Außenverglasung integriert sein. Hierzu können z.B. elektro-chrome Gläser eingesetzt werden, wie diese z.B. von der Firma SageGlass vertrieben werden. In diesem Fall ist es nicht erforderlich, ein zusätzliches, mechanisch ausgebildetes Sonnenschutzmittel (Rollo, Jalousie, usw.) in dem Zwischenraum vorzusehen.

Gemäß einer weiteren zweckmäßigen Ausgestaltung umfasst das Trennelement eine feststehende transparente Trennwand, die sich ohne Zwischenraum über die gesamte Breite des Fenstermoduls erstreckt. Mit anderen Worten wird das Trennelement selbst beim Blick durch das Fenstermodul durch einen Nutzer nicht wahrgenommen. Dadurch, dass sich das Trennelement über die gesamte Breite des Fenstermoduls erstreckt, kann die erwünschte Zirkulation des Luftstroms in dem Zwischenraum ohne seitlichen Bypass oder "Kurzschluss" erfolgen.

Ebenso wie sich das Trennelement über die gesamte Breite des Fenstermoduls erstreckt, ist es zweckmäßig, wenn sich der Luft-Flüssigkeit-Wärmetauscher über die gesamte Breite oder nahezu über die gesamte Breite, z.B. 90% oder 80%, des Fenstermoduls erstreckt.

Um eine Wartung der in dem Zwischenraum enthaltenen Komponenten sowie eine Reinigung der Außenverglasung auf seiner Innenseite sowie der Innenverglasung in Richtung des Zwischenraums zu ermöglichen, ist es zweckmäßig, wenn die Innenverglasung und das Trennelement zum Gebäudeinneren hin öffenbar, insbesondere verschwenkbar, sind. Es wird somit ein Zugang zu dem Luft-Flüssigkeit-Wärmetauscher und/oder Lüfter und/oder der Sonnenschutzvorrichtung zu Wartungszwecken und/oder Reinigungszwecken ermöglicht. Das Verschwenken der Innenverglasung und des Trennelements kann insbesondere unabhängig voneinander zur Seite und/oder nach oben erfolgen. Beispielsweise kann die Innenverglasung um eine vertikal orientierte Achse verschwenkt werden, während das Trennelement um eine horizontal orientierte Achse verschwenkt werden kann, und umgekehrt. Ebenso ist eine Verschwenkung um parallel orientierte Achsen, z.B. vertikal oder horizontal möglich, beider Elemente möglich.

Gemäß einer weiteren zweckmäßigen Ausgestaltung ist das Trennelement derart in dem Zwischenraum angeordnet, dass der zwischen der Außenverglasung und dem Trennelement gebildete Zwischenraum größer ist als der zwischen der Innenverglasung und dem Trennelement gebildete Zwischenraum. Das Verhältnis zwischen dem äußeren Zwischenraum und dem inneren Zwischenraum wird insbesondere abhängig vom Typ (insbesondere Leistungsklasse) des Luft-Flüssigkeit-Wärmetauschers und/oder seiner Einbaulage gewählt. Das Verhältnis kann beispielsweise 1,5:1, 2:1, 2,5:1 oder 3:1 betragen.

Ein besonders einfacher konstruktiver Aufbau des Fenstermoduls wird dadurch ermöglicht, dass das Trennelement sich an einer Gehäusewand des Lüfters und einem Gehäuse oder Verbindungselement des Luft-Flüssigkeit-Wärmetauschers abstützt. Alternativ kann sich das Trennelement an anderen Elementen des Fenstermoduls, z.B. dem Rahmen, abstützen.

Gemäß einer weiteren Ausgestaltung des Fenstermoduls ist vorgesehen, dass in dem Zwischenraum, insbesondere an dem Trennelement oder an dieses angrenzend, und/oder außerhalb des Zwischenraums und angrenzend an die Innenverglasung zumindest ein zur Abgabe von farbigem Licht ausgebildetes Leuchtmittel angeordnet ist, wobei durch die Farbe ein Arbeitsmodus des Fenstermoduls (Heizen oder Kühlen oder neutral) oder eine an den Nutzer gerichtete Information signalisierbar ist. Das Leuchtmittel kann beispielsweise als streifenförmige Lichtquelle, welche eine Vielzahl an zur Abgabe von farbigem Licht ausgebildete LEDs umfasst, ausgebildet sein. Solche LED-Streifen können bei geringem Bauraum geeignet angesteuert zu werden, um eine an den Nutzer gerichtete Information oder einen Arbeitsmodus des Fenstermoduls durch vorgegebene Farbe abzugeben. Solche Informationen können beispielsweise Signale im Sinne einer Mensch-Maschine-Interaktion sein. Beispielsweise können einfache Dinge an die Fassade oder den Boden projiziert werden, wie z.B. Flaggen bei einem Sportereignis. Alternativ kann auch ein Lichtleiter, in dessen Stirnseite oder Stirnseiten Licht eingespeist wird, als Leuchtmittel verwendet werden.

Zweckmäßigerweise ist der Lüfter ein drehzahlregelbarer Querstromventilator, wobei durch die Einstellung der Drehzahl das in dem Zwischenraum zirkulierende Luftvolumen bzw. die Geschwindigkeit der Luftströmung einstellbar ist. Hierdurch kann, in Verbindung mit dem Betrieb des Luft-Flüssigkeit-Wärmetauschers, der Wärme- oder Kälteeintrag zum Nutzraum hin reguliert werden. Vorzugsweise ist der Luft-Flüssigkeit-Wärmetauscher ein Rohrwärmetauscher, insbesondere ein Lamellenwärmetauscher, bei dem der Volumenstrom des Wärmetransportmediums steuerbar einstellbar ist.

Im Einbauzustand des Fenstermoduls in das Gebäude ist eine Unterseite des Gehäuses des Lüfters zweckmäßigerweise oberhalb einer Betondeckenunterkante angeordnet. Eine Oberseite des Gehäuses des Luft-Flüssigkeit-Wärmetauschers ist zweckmäßigerweise unterhalb einer Fußboden-Oberkante angeordnet. Hierdurch ist sichergestellt, dass sich die technischen Komponenten des Fenstermoduls außerhalb eines Sichtbereichs eines Nutzers, der sich im Inneren des Gebäudes befindet, sind.

Gemäß einer weiteren zweckmäßigen Ausgestaltung ist in der Fluidleitung des Luft-Flüssigkeit-Wärmetauschers eingangsseitig ein steuer- oder regelbares Ventil angeordnet, wobei durch die Stellung des Ventils ein Volumenstrom des Wärmetransportmediums durch den Luft-Flüssigkeit-Wärmetauscher zwischen 0 % und 100 % einstellbar ist. Hierdurch kann in Verbindung mit der Drehzahl des Lüfters der Wärme- oder Kälteeintrag zum Nutzraum hin reguliert werden.

Eine weitere zweckmäßige Ausgestaltung sieht vor, dass dieses einen Rahmen mit einem im Einbauzustand oberen Rahmenelement, einem unteren Rahmenelement sowie zwei das obere Rahmenelement und das untere Rahmenelement verbindenden, insbesondere vertikalen, seitlichen Rahmenelementen umfasst, wobei in dem oder durch das untere Rahmenelement ein vom Fenstermodul thermisch isolierter und an ein dezentrales Lüftungsgerät, insbesondere ein Pulslüftungsgerät, anschließbarer Lüftungskanal, der das Gebäudeinnere mit dem Gebäudeäußeren verbindet, ausgebildet ist. Hierdurch ist es nicht erforderlich, für den Luftaustausch (Lufthygiene) Klimaanlagen vorzusehen. Werden mehrere Fenstermodule in einer Gebäudefassade nebeneinander angeordnet, so braucht nicht jedes Fenstermodul mit einem Lüftungskanal versehen zu werden. Es ist ausreichend, z.B. ein einziges Fenstermodul oder jedes zweite oder n-te (n ≥ 2) Fenstermodul pro Nutzraum mit einem Lüftungskanal und einem Lüftungsgerät zu versehen.

Es ist weiterhin zweckmäßig, wenn das untere Rahmenelement den Zwischenraum mit einem wannenförmigen Verkleidungselement abschließt, um eine Luftumlenkung in dem Zwischenraum, insbesondere ohne Verwirbelungen, zu erzielen. Der Begriff "wannenförmiges Verkleidungselement" ist derart zu verstehen, dass das untere Rahmenelement in einem Querschnitt, senkrecht zu einer Ebene der Außen- bzw. Innenverglasung V- oder U-förmig ausgebildet ist, wobei die beiden freien Enden des "V" oder "U" in einem stumpfen Winkel aneinander oder an das zentrale Element des "U" grenzen. Neben der Funktion der Luftumlenkung dient das wannenförmige Verkleidungselement auch dazu, eventuell aus dem Luft-Flüssigkeit-Wärmetauscher austretendes Wärmetransportmedium zu sammeln. Das Vorliegen eines solchen "Fehlerfalls" kann beispielsweise sensorisch ermittelt werden, indem ein geeignet ausgebildeter Sensor in dem wannenförmigen Verkleidungselement angeordnet wird bzw. ist.

Es ist weiterhin zweckmäßig, wenn der Lüftungskanal unterhalb des wannenförmigen Verkleidungselements oder seitlich neben dem wannenförmigen Verkleidungselement angeordnet ist. Dies bedeutet, dass der Lüftungskanal unterhalb des Luft-Flüssigkeit-Wärmetauschers oder seitlich neben dem Luft-Flüssigkeit-Wärmetauscher angeordnet ist.

Gemäß einer weiteren Ausbildung des Fenstermoduls umfasst dieses eine lokale Steuereinheit, die dazu ausgebildet ist, zumindest einen Aktor des Fenstermoduls, umfassend einen Ventil-Stellmotor und/oder einen Antrieb des Lüfters und/oder einen Antrieb der Sonnenschutzvorrichtung, derart zu regeln und/oder zu steuern, dass ein empfangener Ist-Raumtemperaturwert einem vorgegebenen Soll-Raumtemperaturwert entspricht. Mit anderen Worten ist vorgesehen, mit Hilfe der lokalen Steuereinheit die Drehzahl des Lüfters und/oder den Volumenstrom des Luft-Flüssigkeit-Wärmetauschers und/oder die Sonnenschutzvorrichtung derart zu regulieren, dass die gewünschte Raumtemperatur erreicht wird.

In einer weiteren Ausgestaltung umfasst das Fenstermodul zumindest einen Sensor, umfassend jeweilige Temperatursensoren zur Erfassung der Temperaturen des Wärmetransportmediums am Eingang und/oder Ausgang der Fluidleitung des Luft-Flüssigkeit-Wärmetauschers und/oder der Temperaturen der Luft am Eingang und/oder Ausgang des Luft-Flüssigkeit-Wärmetauschers, wobei die Temperaturwerte zumindest der lokalen Steuereinheit zur Verarbeitung für die Regelung und/oder Steuerung des zumindest einen Aktors bereitgestellt werden.

Darüber hinaus kann vorgesehen sein, dass die lokale Steuereinheit eine Schnittstelle umfasst, an der sie zumindest den Ist-Raumtemperaturwert und den vorgegebenen Soll-Raumtemperaturwert von einer zentralen Steuereinheit des Gebäudes oder eines Gebäudeteils, empfängt. Unter einem Gebäudeteil wird beispielsweise ein Stockwerk oder Gebäudeflügel/-segment oder Nutzraum oder eine Gruppe von Nutzräumen verstanden. Über die Schnittstelle kann die lokale Steuereinheit auch Daten an die zentrale Steuereinheit übermitteln, wie z.B. die oben genannten Temperaturwerte, mit denen die zentrale Steuereinheit z.B. in die Lage versetzt wird, eine Leistungsberechnung zur exakten Berechnung der momentan optimalen Gebäudeversorgung vorzunehmen. Ebenso können detaillierte Störmeldungen von der lokalen Steuereinheit an die zentrale Steuereinheit übertragen werden. Dadurch wird im Störfall eine schnelle Behebung von Störungen ermöglicht. Hierdurch kann in kurzer Zeit ein effizienter Betrieb des Fenstermoduls zur Konditionierung des Nutzraums ermöglicht werden. Im Ergebnis ergibt sich eine Instandhaltungs- und Betriebskostenersparnis.

Als weitere Information kann die lokale Steuereinheit von der zentralen Steuereinheit an der Schnittstelle ein Steuersignal für den Antrieb der Sonnenschutzvorrichtung empfangen.

Ein Datenaustausch zwischen der lokalen Steuereinheit und der zentralen Steuereinheit kann beispielsweise über einen Datenbus, z.B. gemäß dem bekannten Modbus-Protokoll, erfolgen.

Gemäß einem zweiten Aspekt der Erfindung wird ein Verfahren zur thermischen Regulierung eines Gebäudes mittels eines Fenstermoduls gemäß einer oder mehrerer Ausgestaltungsvarianten der Erfindung vorgeschlagen. Bei dem Verfahren wird zumindest in dem Kühlbetrieb durch den zumindest einen Lüfter Luft durch den Luft-Flüssigkeit-Wärmetauscher geführt, um Wärme zwischen der Luft und dem Wärmetransportmedium auszutauschen und um die Luft in dem Zwischenraum in einem Kreislauf zu führen. Die Richtung, in der die Luft in dem Zwischenraum in dem Kreislauf geführt wird, sind in dem Kühlbetrieb und dem Heizbetrieb gleich. Hiermit sind die gleichen Vorteile verbunden, wie diese vorstehend in Verbindung mit dem erfindungsgemäßen Fenstermodul erläutert wurden.

Gemäß einem dritten Aspekt der Erfindung wird ein Kühl- und Heizsystem für Gebäude mit zumindest einem Fenstermodul gemäß einer oder mehrerer Ausgestaltungsvarianten der Erfindung vorgeschlagen. Das Kühl- und Heizsystem umfasst darüber hinaus eine Vorrichtung, die dazu ausgebildet ist, in zumindest einem Kreislauf ein Wärmetransportmedium von einem jeweiligen ersten Temperaturniveau auf ein jeweiliges zweites Temperaturniveau zu transportieren. Die Vorrichtung kann beispielsweise eine Kraftwärmemaschine, wie z.B. ein Wärmetauscher, eine Wärmepumpe (Luft-Wasser-Wärmepumpe mit Außenluft, Sole-Wasser-Wärmepumpe mit Erdsonden oder Erdkollektoren, Wasser-Wasser-Wärmepumpe mit Grundwasser oder kalter Nah-/Fernwärme), eine Übergabestation eines Fernwärmenetzes, eine verbrennungsbasierte Heizung (z.B. Pelletheizung, Gasheizung, usw.) sein. Das erste Temperaturniveau kann größer als das zweite Temperaturniveau sein (Kühlbetrieb). Das erste Temperaturniveau kann auch kleiner als das zweite Temperaturniveau sein (Heizbetrieb).

Insbesondere kann nur ein hydraulisches System pro waagrecht nebeneinander angeordneten Fenstermodulen, pro Fassadenausrichtung und Stockwerk eines Gebäudes, vorgesehen sein. Hierdurch werden für alle Fenstermodule gleichbleibende hydraulische Verhältnisse geschaffen. Die elektrische Energie für den Lüfter wird zumindest im sommerlichen Kühlbetrieb mehrheitlich aus erneuerbaren Energiequellen gewonnen. Solche erneuerbaren Energiequellen können beispielsweise fassadenintegrierte Photovoltaikmodule sein. Vorteilhafterweise wird bei hoher Sonneneinstrahlung die für die Lüfter benötigte, elektrische Leistung zeitgleich von Photovoltaikmodulen in derselben Fassade erzeugt. Die Gleichzeitigkeit der Sonneneinstrahlung und des Kühlbedarfs macht diese Lösung besonders effektiv. Im winterlichen Heizbetrieb können die Lüfter mit reduzierter Leistung betrieben werden.

Die Erfindung wird nachfolgend näher anhand von Ausführungsbeispielen in der Zeichnung erläutert. Es zeigen:
- Fig. 1: eine schematische Darstellung eines erfindungsgemäßen Fenstermoduls in einem Querschnitt;
- Fig. 2: eine schematische Darstellung des in Fig. 1 gezeigten Fenstermoduls im Einbauzustand in einen Nutzraum eines Gebäudes;
- Fig. 3: eine schematische Darstellung zweier auf gegenüberliegenden Seiten des Gebäudes in jeweilige Nutzräume eingebaute Fenstermodule, die wie in Fig. 1 aufgebaut und hydraulisch miteinander gekoppelt sind; und
- Fig. 4: eine schematische Darstellung zweier auf gegenüber liegenden Seiten des Gebäudes in jeweilige Nutzräume eingebaute Fenstermodule, welche hydraulisch miteinander gekoppelt sind und an eine Vorrichtung zur Bereitstellung von warmen oder kaltem Wärmetransportmittel angeschlossen sind.

In sämtlichen Figuren werden gleiche Bezugszeichen für gleiche Elemente verwendet. Die Zeichnungen sind lediglich schematischer Natur und dienen dem Verständnis der Erfindung, so dass die Größenverhältnisse und Proportionen nicht der Wirklichkeit entsprechen oder entsprechen müssen.

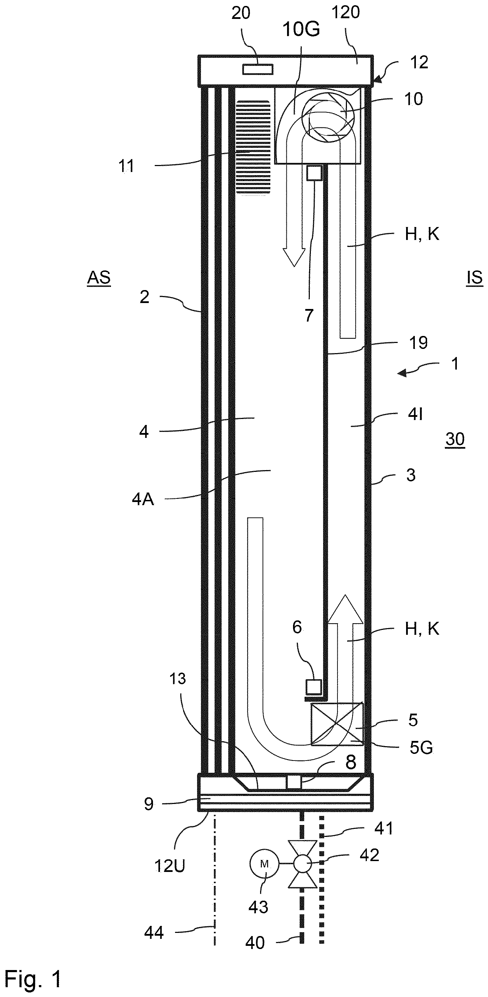

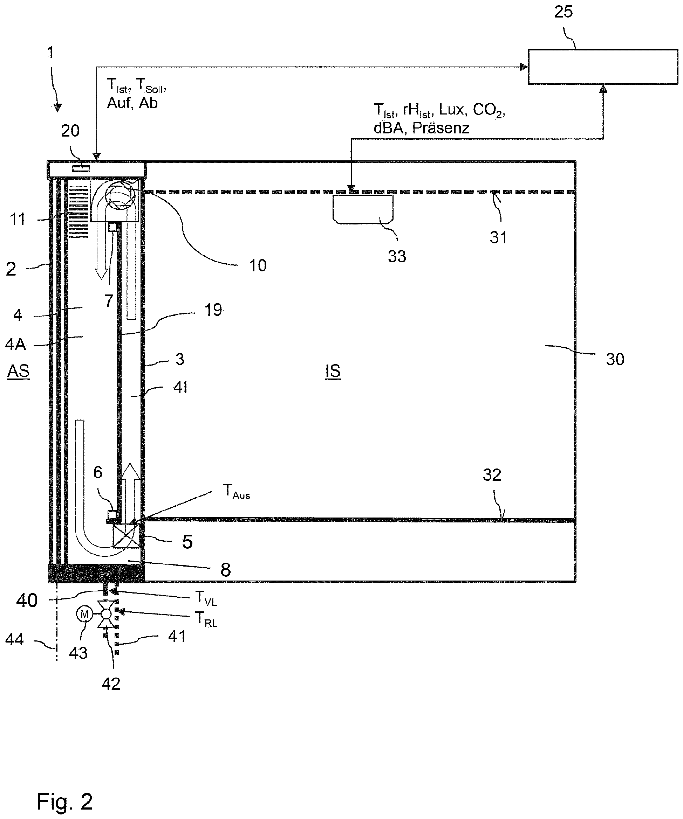

In den nachfolgend im Detail beschriebenen Figuren 1 bis 4 ist eine schematische Darstellung eines Ausführungsbeispiels eines erfindungsgemäßen Fenstermoduls 1 im Querschnitt gezeigt. Das Fenstermodul 1, das in Fig. 1 alleine und in den Figuren 2 bis 4 in unterschiedlichen Einbausituationen dargestellt ist, ist dazu ausgelegt, zur thermischen Regulierung eines Gebäudes verwendet zu werden. Unter der thermischen Regulierung eines Gebäudes wird dabei die Möglichkeit verstanden, einen auf einer Innenseite IS des Fenstermoduls 1 liegenden Nutzraum 30 durch Heizung oder Kühlung zu konditionieren. Das Fenstermodul 1 sorgt darüber hinaus für einen Sonnenschutz durch einstellbare Beschattung und kann darüber hinaus dazu ausgebildet sein, eine Lüftung des Nutzraums 30 zu ermöglichen.

Das Fenstermodul 1 umfasst einen Rahmen 12, welcher in diesem Beispiel aus vier Rahmenelementen besteht, von denen in den gezeigten Querschnittsdarstellungen jeweils ein oberes Rahmenelement 120 und ein unteres Rahmenelement 12U ersichtlich sind. Die Buchstaben "O" und "U" kennzeichnen dabei die Position "oben" oder "unten" eines jeweiligen Rahmens in seinem Einbauzustand in einem nicht näher dargestellten Gebäude. Mittels der Rahmenelemente 120, 12U sowie der in den Figuren nicht dargestellten linken und rechten Rahmenelemente werden eine Au-ßenverglasung 2 und eine von dieser beabstandete Innenverglasung 3 des Fenstermoduls 1 gehalten. Zwischen der Außenverglasung 2 und der Innenverglasung 3 ist ein gegenüber Feststoffen, insbesondere Staub, abgedichteter Zwischenraum 4 gebildet. Der Zwischenraum 4 ist zur Vermeidung von Kondensation gegenüber dem Nutzraum diffusionsoffen. Der Zwischenraum 4 ist mit Luft gefüllt.

Während es sich bei der Außenverglasung 2 um eine hochisolierende Verglasung handelt, kann die Innenverglasung 3 als Einfachverglasung, Einscheibensicherheitsglas oder als Verbundsicherheitsglas ausgebildet sein. Somit ist der Wärmedurchgangskoeffizient Uₐ der Außenverglasung 2 kleiner als der Wärmedurchgangskoeffizient Uᵢ der Innenverglasung 3. Der Faktor, um den der Wärmedurchgangskoeffizient Uₐ der Außenverglasung 2 kleiner als der Wärmedurchgangskoeffizient Uᵢ der Innenverglasung 3 ist, hängt grundsätzlich von der gewünschten thermischen Regulierung des Gebäudes ab. Zweckmäßig ist es, wenn der Wärmedurchgangskoeffizient Uₐ der Außenverglasung 2 mindestens um den Faktor 3, insbesondere um den Faktor 5 und größer, kleiner ist als der Wärmedurchgangskoeffizient Uᵢ der Innenverglasung 3. Falls das Fenstermodul lediglich zur Kühlung des Gebäudes ausgebildet wird, ist ein Faktor von 3 ausreichen, d. h. Uᵢ/Uₐ = 3. Soll das Fenstermodul auch zur Heizung des Nutzraums genutzt werden, so ist ein Faktor von 5 oder größer zweckmäßig, d. h. Uᵢ/Uₐ > 5.

Durch die hochisolierende Außenverglasung 2 wird ein Wärmeaustausch zwischen der Außenseite AS (auch als Umgebung bezeichnet) des Gebäudes und dem Inneren des Fenstermoduls 1, aber auch des Nutzraums 30 auf der Innenseite IS, d.h. des Gebäudeinneren, wesentlich reduziert. Aufgrund der thermischen Regulierung der Temperatur durch das Fenstermodul 1 ist eine geringer isolierende Innenverglasung 3 vorteilhaft, da wegen der durch das Fenstermodul 1 kontrollierten Temperatur Wärme nach innen abgegeben wird bzw. abgegeben werden soll oder vom Nutzraum an das Fenstermodul abgegeben wird bzw. abgegeben werden soll.

Das Fenstermodul 1 umfasst einen Luft-Flüssigkeit-Wärmetauscher 5, welcher ein fluiddurchströmtes Kühl-/Heizelement mit einer Fluidleitung, in der ein Wärmetransportmedium geführt ist, umfasst. Als Wärmetransportmedium kann beispielsweise Wasser oder ein Wasser-Glykol-Gemisch genutzt werden. Der Luft-Flüssigkeit-Wärmetauscher 5 ist insbesondere ein Rohrwärmetauscher, insbesondere ein Lamellenwärmetauscher. Solche Rohrwärmetauscher sind dem Fachmann gut bekannt, so dass auf eine detaillierte Beschreibung des konstruktiven Aufbaus an dieser Stelle verzichtet wird.

In den in den Figuren 1 bis 4 gezeigten Ausführungsbeispielen ist der Luft-Flüssigkeit-Wärmetauscher im Einbauzustand des Fenstermoduls 1 unten, horizontal liegend, in dem Zwischenraum angeordnet, so dass er von Luft aus dem Zwischenraum durchströmbar ist. Wie insbesondere der Fig. 1 ohne Weiteres entnehmbar ist, ist der Luft-Flüssigkeit-Wärmetauscher 5 angrenzend an die Innenverglasung 3 und angrenzend an das untere Rahmenelement 12U angeordnet.

In einer in den Figuren nicht gezeigten Ausgestaltungsvariante könnte der Luft-Flüssigkeit-Wärmetauscher 5 im Einbauzustand des Fenstermoduls 1 auch oben, horizontal liegend, in dem Zwischenraum angeordnet sein, so dass er von Luft aus dem Zwischenraum durchströmbar ist. In dieser in den Figuren nicht dargestellten, alternativen Ausgestaltungsvariante wäre der Luft-Flüssigkeit-Wärmetauscher 5 an die Innenverglasung 3 und angrenzend an das obere Rahmenelement 120 angeordnet.

Obwohl vom physikalischen Grundprinzip die Anordnung des Luft-Flüssigkeit-Wärmetauschers 5 sowohl unten als auch oben, horizontal liegend, in dem Zwischenraum 4 angeordnet sein kann, ist es aus konstruktiver Sicht bevorzugt, den Luft-Flüssigkeit-Wärmetauscher 5 in dem Zwischenraum 4 unten anzuordnen, wie dies auch in den Figuren 1 bis 4 dargestellt ist.

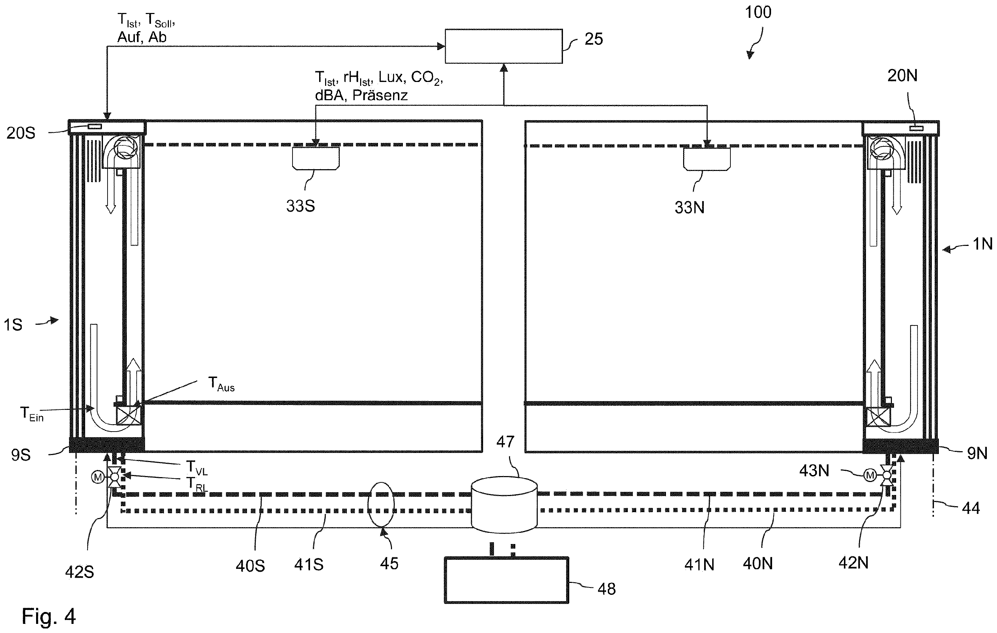

Die Anordnung des Luft-Flüssigkeit-Wärmetauschers 5 in dem Fenstermodul 1 ist derart, dass er von Luft aus dem Zwischenraum 4 durchströmbar ist. Die in dem Zwischenraum 4 geführte Luft gibt Wärme über den Luft-Flüssigkeit-Wärmetauscher 5 an das Wärmetransportmedium ab oder nimmt Wärme von diesem auf, so dass die in dem Zwischenraum 4 in einem Kreislauf geführte Luft gekühlt oder erwärmt wird. Das Wärmetransportmedium in dem Luft-Flüssigkeit-Wärmetauscher 5 wird in einer Vorrichtung 48, die dazu ausgebildet ist, in zumindest einem Kreislauf das Wärmetransportmedium von einem jeweiligen ersten Temperaturniveau auf ein j eweiliges zweites Temperaturniveau zu transportieren, gekühlt oder erwärmt (Fig. 4).

Die genannte Vorrichtung, die nicht weiter im Detail beschrieben wird, kann eine Kraftwärmemaschine, z.B. ein Wärmetauscher, eine Wärmepumpe, eine Übergabestation eines Fernwärmenetzes oder eine verbrennungsbasierte Heizung sein. Das erste Temperaturniveau kann dabei größer als das zweite Temperaturniveau sein. In diesem Fall erfolgt ein Heizen des Nutzraums 30. Ist das erste Temperaturniveau kleiner als das zweite Temperaturniveau, kann eine Kühlung des Nutzraums 30 erfolgen.

Für eine Zwangsführung der in dem Zwischenraum 4 befindlichen Luft ist in dem Zwischenraum 4 ein Lüfter 10 angeordnet. Durch den Lüfter 10 wird Luft durch den Luft-Flüssigkeit-Wärmetauscher 5 in Pfeilrichtung H (Strömungsrichtung der Luft im Heizbetrieb), K (Strömungsrichtung der Luft im Kühlbetrieb) geführt, um Wärme zwischen der Luft und dem in dem Luft-Flüssigkeit-Wärmetauscher 5 geführten Wärmetransportmedium auszutauschen. Darüber hinaus dient der Lüfter 10 dazu, die Luft in dem Zwischenraum 4 in einem Kreislauf zu führen, deren Richtung durch die Pfeile H, K angedeutet ist.

Der Lüfter 10 ist im Einbauzustand des Fenstermoduls oben oder unten, horizontal liegend, in dem Zwischenraum 4 angeordnet. Die Anordnung des Lüfters 10 erfolgt in dem Zwischenraum 4 oben, horizontal liegend, wenn der Luft-Flüssigkeit-Wärmetauscher 5 unten, horizontal liegend, in dem Zwischenraum 4 angeordnet ist, wie dies in den Figuren 1 bis 4 dargestellt ist. In entsprechender Weise erfolgt die Anordnung des Lüfters 10 in dem Zwischenraum 4 unten, horizontal liegend, wenn der Luft-Flüssigkeit-Wärmetauscher 5 oben, horizontal liegend, in dem Zwischenraum 4 angeordnet ist. Diese Ausgestaltungsvariante ist, wie oben beschrieben, in den Figuren nicht dargestellt.

Der Lüfter 10 wird sowohl im Kühlbetrieb als auch im Heizbetrieb, welche Betriebsmodi des Fenstermoduls 1 darstellen, betrieben. Als Lüfter 10 wird vorzugsweise ein Querstromventilator eingesetzt. Dieser weist eine hohe Effizienz auf, da die Drehrichtung des Lüfters 10, unabhängig vom Betriebsmodus des Fenstermoduls 1, nicht verändert werden zu braucht.

Um die Luft in dem Zwischenraum 4 in einem Kreislauf zu führen, ist der Zwischenraum 4 in einen inneren Zwischenraum 4I und einen äußeren Zwischenraum 4A unterteilt, um - durch Zwangsführung durch den Betrieb des Lüfters 10 - eine steigende Luftströmung in dem inneren Zwischenraum 4I und eine fallende Luftströmung in dem äußeren Zwischenraum 4A zu ermöglichen. Die Unterteilung des Zwischenraums 4 in den äußeren Zwischenraum 4A und den inneren Zwischenraum 4I wird mit Hilfe eines in dem Zwischenraum 4 angeordneten Trennelements 19 sichergestellt.

Das Trennelement 19, z.B. eine feststehende transparente Trennwand 15, verläuft im Wesentlichen parallel zu der Außenverglasung 2 und der Innenverglasung 3. Dabei erstreckt sich das Trennelement 19 ohne Zwischenraum über die gesamte Breite des Fenstermoduls. Hierdurch wird ein "Kurzschluss" oder "Bypass" zwischen dem äu-ßeren Zwischenraum 4A und dem inneren Zwischenraum 4I seitlich des Trennelements 19 verhindert.

Das Trennelement 19 ist vorzugsweise derart in dem Zwischenraum 4 angeordnet, dass der zwischen der Außenverglasung 2 und dem Trennelement 19 gebildete Zwischenraum 4A größer ist als der zwischen der Innenverglasung 3 und dem Trennelement 19 gebildete Zwischenraum 4I. Das Verhältnis zwischen dem äußeren Zwischenraum 4A und dem inneren Zwischenraum 4I wird insbesondere abhängig vom Typ des Luft-Flüssigkeit-Wärmetauschers (insbesondere seinen Leistungsdaten) sowie seiner Einbaulage gewählt. Das Verhältnis kann beispielsweise 1,5:1, 2:1, 2,5:1 oder 3:1 betragen.

Die gesamte, zwischen der Außenverglasung 2 und der Innenverglasung 3 gebildete Länge des Zwischenraums 4 ist bevorzugt größer als 150 mm. Der zwischen der Innenverglasung 3 und der Außenverglasung 2 gebildete Abstand wird dabei ebenfalls abhängig vom Typ und der Leistungsklasse des Luft-Flüssigkeit-Wärmetauschers sowie seiner Einbaulage gewählt. Der Abstand kann auch anders gewählt werden und insbesondere wesentlich größer als 150 mm sein.

Sind der Lüfter 10 in dem Zwischenraum 4 oben und der Luft-Flüssigkeit-Wärmetauscher 5 unten in dem Zwischenraum 4 angeordnet, wie dies in den Figuren 1 bis 4 dargestellt ist, so wird die Luft aufgrund der Drehrichtung des Lüfters 10 in dem Zwischenraum 4I von unten nach oben, d.h. von dem Luft-Wärmetauscher 5 in Richtung des Lüfters 10, transportiert, während die Luft in dem äußeren Zwischenraum 4A von oben nach unten, d.h. vom Lüfter 10 in Richtung Luft-Flüssigkeit-Wärmetauscher 5, transportiert wird. Sind der Lüfter 10 und der Luft-Flüssigkeit-Wärmetauscher 5 in der erwähnten alternativen Konfiguration in dem Zwischenraum 4 angeordnet, ergibt sich eine Luftströmung in umgekehrter Richtung. In jedem Fall erfolgt ein Betrieb des Fenstermoduls derart, dass unabhängig vom Betriebsmodus (Heizen oder Kühlen) die Luft in dem Zwischenraum in der gleichen Richtung im Kreislauf geführt wird.

Wie am besten aus der Querschnittsdarstellung der Fig. 1 hervorgeht, kann sich das Trennelement 19 an einer Gehäusewand 10G des Lüfters 10 und einem Gehäuse oder Verbindungselement des Luft-Flüssigkeit-Wärmetauschers 5 abstützen, wobei dies nicht zwingend ist.

Um eine Wartung der in dem Zwischenraum 4 enthaltenen Komponenten (Lüfter 10 und/oder Luft-Wärmetauscher 5) sowie eine Reinigung der Außenverglasung 2 auf seiner zum Innenraum 4 gewandten Seite sowie der Innenverglasung 3 in Richtung des Zwischenraums 4 als auch des Trennelements 19 zu ermöglichen, ist es zweckmäßig, wenn die Innenverglasung 3 und das Trennelement 19 zur Innenseite IS des Gebäudes bzw. Nutzraums 30 hin öffenbar sind. Hierzu können beispielsweise die Innenverglasung 3 und das Trennelement 19 an figürlich nicht dargestellten Gelenken, die sich beispielsweise an einem seitlichen Rahmenelement des Rahmens 12 befinden, befestigt sein, um ein Verschwenken wie bei einem herkömmlichen Fensterflügel zu ermöglichen. Das Verschwenken von Innenverglasung 3 und Trennelement 19 kann beispielsweise zur Seite hin, alternativ aber auch nach oben erfolgen. Die Richtung des Verschwenkens von Innenverglasung 3 und Trennelement 19 kann auch unabhängig voneinander erfolgen.

Das Fenstermodul 1 umfasst darüber hinaus eine steuerbar verstellbare Sonnenschutzvorrichtung 11 als Sonnenschutzfunktion. Die Sonnenschutzvorrichtung 11 ist in dem äußeren Zwischenraum 4A angeordnet. Sie grenzt insbesondere unmittelbar an die Außenverglasung 2 an, so dass bei aktivierter Sonnenschutzfunktion (d.h. teilweise oder vollständiger Überdeckung der Außenverglasung und daraus resultierender Beschattung des Nutzraums 30) der äußere Zwischenraum 4A vollständig oder im Wesentlichen zwischen der Sonnenschutzvorrichtung 11 und dem Trennelement 19 gebildet ist.

Die Sonnenschutzvorrichtung 11 kann beispielsweise, wie in Fig. 1 angedeutet, durch eine Jalousie, die am oberen Rahmenelement 120 befestigt ist, gebildet sein. In Fig. 1 ist die Jalousie in ihrer geöffneten Position dargestellt, in der die einzelnen Lamellen aneinander angrenzen. Wird der Abstand zwischen den aneinander angrenzenden Lamellen vergrößert, so kann die Jalousie von oben in Richtung des unteren Rahmenelements 12U verfahren werden. Durch die Einstellung des Winkels der Lamellen kann darüber hinaus festgelegt werden, wie viel Licht in Richtung der Innenseite IS durchgelassen werden soll. Ebenso kann durch das Maß der Überdeckung der Sonnenschutzvorrichtung 11 mit der Außenverglasung 2 bzw. der Innenverglasung 3 festgelegt werden, wie viel Strahlung durch die Sonnenschutzvorrichtung 11 absorbiert und reflektiert wird.

Die Sonnenschutzvorrichtung 11 ist bevorzugt aus einem Sonnenstrahlung absorbierenden und reflektierenden Material ausgebildet, die derart verstellbar ist, dass die Tageslichtstärke in dem Nutzraum 30 einstellbar ist. Die Sonnenschutzvorrichtung 11 kann alternativ zu der dargestellten Jalousie als Rollo, Doppelrollo, textiler Vorhang und dergleichen ausgeführt sein. Die mechanischen Komponenten sind dabei bevorzugt, wie in Fig. 1 dargestellt, an dem oberen Rahmenelement 120 derart befestigt, dass diese bei Deaktivierung in einem zwischen dem Gehäuse 10G des Lüfters und der Außenverglasung 2 gebildeten Zwischenraum vollständig aufgenommen werden können, wodurch die Sonnschutzvorrichtung 11 im deaktivierten Zustand außerhalb eines Sichtbereichs eines Nutzers ist.

Die Sonnenschutzvorrichtung 11 kann auch als schaltbares Glas in die Außenverglasung integriert sein. Hierzu können z.B. elektro-chrome Gläser eingesetzt werden, wie diese z.B. von der Firma SageGlass vertrieben werden (https://www.sageglass.com/de/intelligentes-glas/funktionsprinzip-elektrochromem-glas). In diesem Fall kann das in Fig. 1 gezeigte mechanische Sonnenschutzelement (Jalousie, Rollo, usw.) optional vorgesehen sein.

Dadurch, dass die Sonnenschutzvorrichtung 11 an die Außenverglasung 2 angrenzt, ergeben sich unabhängig von einer Aktivierung oder Nicht-Aktivierung der Sonnenschutzvorrichtung 11 in dem Zwischenraum ähnliche Strömungsverhältnisse bei der Zirkulation der Luft. Insbesondere ergibt sich dadurch im Vergleich zu einer anderen Anordnung der Sonnenschutzfunktion in dem Zwischenraum eine weniger turbulente Strömung der Luft, wodurch das Fenstermodul 1 mit höherer Effizienz und geringerer Geräuschentwicklung betrieben werden kann. Darüber hinaus kann durch das Angrenzen der Sonnenschutzvorrichtung 11 an die Außenverglasung 2 ein geringerer Wärmeeintrag in den Zwischenraum 4 des Fenstermoduls bewirkt werden. Zudem ergeben sich dadurch geringere Vibrationen und eine geringere mechanische Beanspruchung der in dem Zwischenraum angeordneten Komponenten.

Wie am besten der Fig. 1 entnehmbar ist, sind in dem Zwischenraum 4 zwei (optionale) Leuchtmittel 6, 7 angeordnet, welche zur Abgabe von farbigem Licht ausgebildet sind. Die Leuchtmittel 6, 7 sind beispielsweise Lichtleiter oder Lichtbänder, welche jeweils eine Vielzahl an, insbesondere einzeln, steuerbaren LEDs, z.B. RGB-LEDs umfassen. Das Leuchtmittel 6 ist hierbei ein unteres Leuchtmittel, das in dem äußeren Zwischenraum 4A angrenzend an den Luft-Flüssigkeit-Wärmetauscher 5 angeordnet ist. Das Leuchtmittel 7 stellt ein oberes Leuchtmittel dar, das in dem äußeren Zwischenraum 4A angrenzend an den Lüfter 10 angeordnet ist.

Die Leuchtmittel 6, 7 dienen insbesondere dazu, durch die Farbe den Arbeitsmodus des Fenstermoduls zu signalisieren. Alternativ oder zusätzlich kann - bei geeigneter Ausgestaltung des Leuchtmittels 6, 7 - auch eine an den Nutzer gerichtete Information signalisiert werden. Solche Informationen können Signale im Sinne einer Mensch-Maschine-Interaktion sein. Beispielsweise können einfache Dinge auf einen Boden 32 oder eine Decke 31 (Fig. 2) des Nutzraums 30 projiziert werden, wie z.B. Flaggen einer Sportveranstaltung (Fußball-WM oder -EM).

Entgegen der zeichnerischen Darstellung kann in dem Fenstermodul auch nur eines der beiden Leuchtmittel 6, 7 vorgesehen sein. Alternativ können das oder die Leuchtmittel 6, 7 auch in dem inneren Zwischenraum 4I angeordnet sein. Alternativ oder zusätzlich können das oder die Leuchtmittel auch außerhalb des Zwischenraums 4, insbesondere angrenzend an die Innenverglasung 3, z.B. an oder in dem unteren oder oberen Rahmenelement 12U, 120, angeordnet sein.

Wie vorstehend beschrieben, umfasst der Luft-Flüssigkeit-Wärmetauscher 5 ein fluiddurchströmtes Kühl-/Heizelement mit einer Fluidleitung, in der das Wärmetransportmedium geführt ist. Eingangsseitig der Fluidleitung des Luft-Flüssigkeit-Wärmetauschers 5 ist ein steuer- oder regelbares Ventil 42 angeordnet, wobei durch die Stellung des Ventils 42 mittels eines Ventilantriebs 43 ein Volumenstrom des Wärmetransportmediums durch den Luft-Flüssigkeit-Wärmetauscher 5 zwischen 0 % und 100 % einstellbar ist. In Fig. 1 ist das Ventil lediglich schematisch und der Einfachheit halber außerhalb des Rahmens 12 des Fenstermoduls dargestellt. In der Praxis können das Ventil 42 und sein Ventilantrieb 43 z.B. in dem unteren Rahmenelement 12U angeordnet sein.

Der Ventilantrieb 43 ist beispielsweise ein Stellmotor, der mit elektrischer Energie versorgt wird. Zu diesem Zweck ist eine Energieversorgungsleitung 44 schematisch angedeutet, welche beispielsweise ebenfalls dem unteren Rahmenelement 12U zugeordnet ist bzw. in dieses führt.

Wie schematisch in den Figuren dargestellt ist, ist das Ventil 42 in einer Zuleitung 40 zu der Fluidleitung des Luft-Flüssigkeit-Wärmetauschers 5 angeordnet. Eine Rückleitung des Fenstermoduls 1, die ausgangsseitig mit der Fluidleitung des Luft-Flüssigkeit-Wärmetauschers 5 gekoppelt ist, ist schematisch mit dem Bezugszeichen 41 gekennzeichnet.

Das untere Rahmenelement 12U weist auf seiner zu dem Zwischenraum 4 gerichteten Wandseite ein wannenförmiges Verkleidungselement 13 auf. Hierdurch wird einerseits eine Luftumlenkung mit geringen Verwirbelungen in dem Zwischenraum 4 erzielt. Zum anderen kann, sollte der Luft-Flüssigkeit-Wärmetauscher 5 aufgrund eines technischen Defekts Flüssigkeit verlieren, das aus dem Luft-Flüssigkeit-Wärmetauscher 5 austretende Wärmetransportmedium sich in dem wannenförmigen Verkleidungselement 13 sammeln. Um eine solche Undichtigkeit des Luft-Flüssigkeit-Wärmetauschers 5 zu detektieren, ist es zweckmäßig, wenn am Boden des wannenförmigen Verkleidungselements 13 des unteren Rahmenelements 12U ein entsprechender Leckagesensor angeordnet ist.

In dem zwischen dem Boden des wannenförmigen Verkleidungselements 13 und der unteren Wandfläche des unteren Rahmenelements 12U gebildeten Zwischenraum ist vorzugsweise ein optionaler Lüftungskanal 9 ausgebildet, der die Außenseite AS des Gebäudes mit der Innenseite IS des Gebäudes bzw. Nutzraums 30 verbindet. Insbesondere ist der Lüftungskanal 9 an ein in den Figuren nicht näher dargestelltes Pulslüftungsgerät angeschlossen, um einen Luftaustausch ohne das Erfordernis einer gesonderten Lüftungsanlage in dem Gebäude zu ermöglichen.

Werden in einer Gebäudefassade mehrere Fenstermodule nebeneinander angeordnet, die dem gleichen Nutzraum 30 zugeordnet sind, so braucht nicht jedes Fenstermodul 1 mit einem solchen Lüftungskanal 9 versehen zu sein. Es ist beispielsweise ausreichend, z.B. ein Fenstermodul pro Nutzraum 30 oder jedes n-te Fenstermodul pro Nutzraum 30 mit einem Lüftungskanal 9 und zugeordnetem (Puls-)lüftungsgerät zu versehen.

Während in der zeichnerischen Darstellung der Fig. 1 der Lüftungskanal 9 unterhalb des wannenförmigen Verkleidungselements 9 angeordnet ist, könnte der Lüftungskanal 9 auch seitlich neben dem wannenförmigen Verkleidungselement 13 angeordnet sein, sofern sich der wannenförmige Querschnitt nicht über die gesamte Breite des unteren Rahmenelements 12U erstreckt. Mit anderen Worten bedeutet dies, dass der Lüftungskanal 9 damit unterhalb des Luft-Flüssigkeit-Wärmetauschers 5 oder seitlich neben diesem angeordnet sein kann.

Wie aus der vorangegangenen Beschreibung deutlich wurde, umfasst das Fenstermodul 1 eine Mehrzahl an Aktoren (Ventilantrieb 43, drehzahlregelbarer Lüfter 10, Antrieb der Sonnenschutzvorrichtung 11, Leuchtmittel 6, 7) und Sensoren (Leckagesensor 8, verschiedene Temperatursensoren, usw.), zu deren Ansteuerung eine lokale Steuereinheit 20 vorgesehen ist. Unter dem Begriff der "Steuereinheit" ist eine Steuer- und Regeleinheit zu verstehen, d.h. eine Recheneinheit, die dazu ausgebildet ist, eine jeweilige technische Komponente abhängig von ihrer Anwendung zu steuern oder zu regeln.

Die Steuerung bzw. Regelung der Aktoren 6, 7, 10, 11, 43 erfolgt individuell in Abhängigkeit eines empfangenen Ist-Raumtemperaturwerts Tᵢₛₜ, so dass diese einem vorgegebenen Soll-Raumtemperaturwert Tₛₒₗₗ entspricht. Lediglich beispielhaft ist die lokale Steuereinheit 20 in dem oberen Rahmenelement 120 angeordnet. Es versteht sich, dass diese mit der Energieversorgungsleitung 44 oder einer in das obere Rahmenelement 120 separat geführten Energieversorgungsleitung zu deren Energieversorgung verbunden ist.

Neben dem in Fig. 1 explizit dargestellten Leckagesensor 8 umfasst das Fenstermodul 1 die oben bereits erwähnten Sensoren, deren Messwerte zumindest der lokalen Steuereinheit 20 des Fenstermoduls 1 zur Verarbeitung für die Regelung und/oder Steuerung eines oder mehrerer Aktoren 6, 7, 10, 11, 43 bereitgestellt werden. Als Sensoren sind insbesondere jeweilige, in den Figuren nicht explizit dargestellte Temperatursensoren zur Erfassung der Temperaturen des Wärmetransportmediums am Eingang und/oder Ausgang der Fluidleitung des Luft-Flüssigkeit-Wärmetauschers 5 und/oder der Temperaturen der Luft am Eingang und/oder Ausgang des Luft-Flüssigkeit-Wärmetauschers 5 vorgesehen.

Die lokale Steuereinheit 20 ist dazu ausgebildet, Daten mit einer zentralen Steuereinheit 25 (Figuren 2 bis 4) auszutauschen, d.h. Daten von der zentralen Steuereinheit 25 zu empfangen und/oder Daten an die zentrale Steuereinheit 25 zu übermitteln. Die zentrale Steuereinheit 25 ist insbesondere eine zentrale Steuereinheit des gesamten Gebäudes oder eines Gebäudeteils, z.B. eines Stockwerks, Gebäudeflügels, Gebäudesegments, Nutzraums oder Gruppe von Nutzräumen.

Für die Datenkommunikation umfasst die lokale Steuereinheit 20 eine nicht explizit dargestellte Schnittstelle, an der sie zumindest den bereits genannten Ist-Raumtemperaturwert Tᵢₛₜ und den vorgegebenen Soll-Raumtemperaturwert Tₛₒₗₗ von der zentralen Steuereinheit 25 empfängt. Ebenso kann die lokale Steuereinheit 20 von der zentralen Steuereinheit 25 an der Schnittstelle ein Steuersignal (Auf, Ab) für den Antrieb der Sonnenschutzvorrichtung 11 empfangen. Ein solches Steuersignal kann beispielsweise automatisiert erzeugt werden, wenn das Fenstermodul 1 in einer, z.B. nach Süden ausgerichteten Gebäudefassade, starker Sonnenstrahlung ausgesetzt ist. Das Steuersignal kann auch an einer nicht dargestellten Nutzraum-Bedieneinheit nutzerbasiert erzeugt werden.

Die zentrale Steuereinheit 25 kann zur Erzeugung der Steuersignale (Tᵢₛₜ, Tₛₒₗₗ, Auf, Ab) mit weiteren Sensoren, z.B. einem Raumsensor 33, verbunden sein. Der Sensor 33 kann einen oder mehrere gleicher oder unterschiedliche Sensoren umfassen, die zur messtechnischen Ermittlung unterschiedlicher Sensorwerte ausgebildet sind und diese an die zentrale Steuereinheit 25 übertragen. Ein solcher Sensor wird auch als Multi-Sensor bezeichnet. Beispielsweise kann der Sensor 33, der z.B. an der Decke 31 des Nutzraums 30 angeordnet ist, die aktuelle Raumtemperatur (Ist-Raumtemperaturwert Tᵢₛₜ), eine Ist-Luftfeuchtigkeit (rHᵢₛₜ), eine aktuelle Beleuchtungsstärke (Lux) einen aktuellen Kohlendioxidwert (CO₂), eine aktuelle Lautstärke (dBA), die Präsenz eines oder mehrerer Personen in den Nutzraum 30 und andere Werte erfassen. Aus diesen Informationen generiert die zentrale Steuereinheit 25 dann die entsprechenden Steuerinformationen und überträgt diese an die lokale Steuereinheit 20.

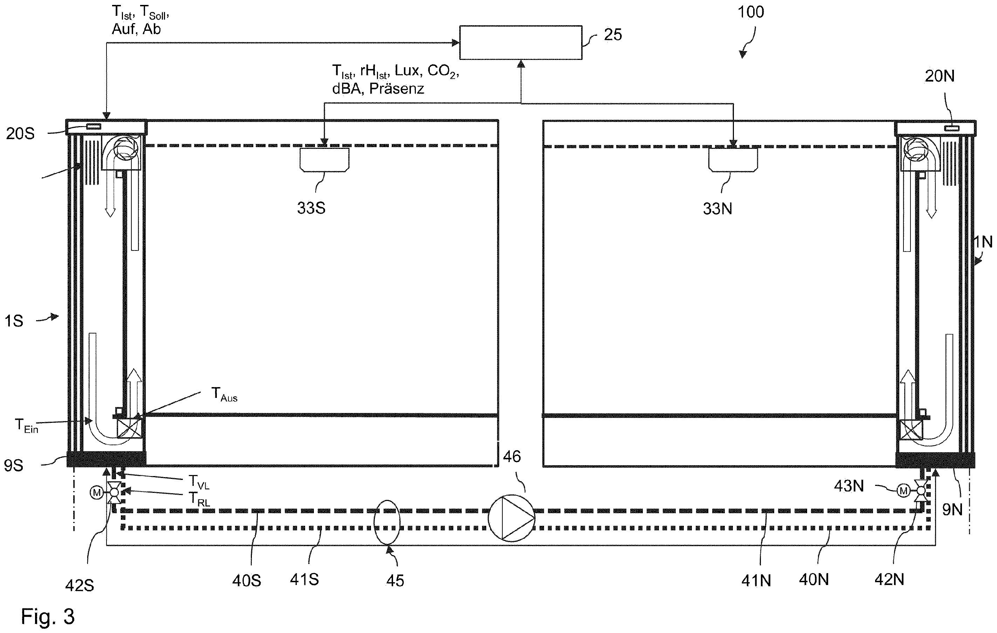

Wie beispielsweise den Figuren 3 und 4 entnehmbar ist, kann die zentrale Steuereinheit 25 hierbei mit mehreren (Multi-)Sensoren 33S, 33N einer Mehrzahl an Nutzräumen 30S, 30N gekoppelt sein, um von diesen jeweilige Daten zur Verarbeitung zu empfangen. In den Ausführungsbeispielen der Figuren 3 und 4 bedeutet das Suffix "S", dass der Nutzraum und das zugeordnete Fenstermodul 1S auf einer zum Süden hin ausgerichteten Fassadenseite angeordnet sind. Das Suffix "N" bedeutet, dass der Nutzraum 30N und das zugehörige Fenstermodul 1N auf einer gegenüberliegenden Fassade, der Nord-Fassade, angeordnet sind. Es versteht sich, dass dies lediglich beispielhaft zu Zwecken der Erläuterung gewählt ist.

In Fig. 3 ist darüber hinaus zu erkennen, dass die jeweiligen Zuleitungen 40S, 40N und Rückleitungen 41S, 41N mit einem Leitungssystem 45, umfassend eine Zuleitungsanordnung und eine Rückleitungsanordnung, gekoppelt sind. In dem Leitungssystem 45 ist zumindest eine Umschalt- und Pumpvorrichtung 46 angeordnet. Mittels der Umschalt- und Pumpvorrichtung 46 ist es möglich, eine Rücklaufleitung 41S des Fenstermoduls 1 auf der Südseite mit einer Zuleitung 40N des Fenstermoduls 1N auf der Nordseite zu verbinden, so dass der Nutzraum auf der Südseite gekühlt und der Nutzraum 30 N auf der Nordseite geheizt werden kann.

Mit anderen Worten kann gemäß der schematisch gezeigten Anordnung in Fig. 3 eine "Energieverschiebung" von Fenstermodulen, die starker Sonneneinstrahlung ausgesetzt sind, zu Fenstermodulen, die z.B. auf der Schattenseite angeordnet sind, erfolgen. Während beispielsweise die auf der Südseite angeordneten Nutzräume auf diese Weise mit Hilfe der erfindungsgemäßen Fenstermodule gekühlt werden können, können vergleichsweise kühlere Nutzräume 30N auf der Nordseite ohne das Vorsehen einer gesonderten Heizanlage temperiert werden.

Fig. 4 zeigt die in Verbindung mit Fig. 3 bereits beschriebene Anordnung von Nutzräumen und Fenstermodulen des Gebäudes 100, wobei das Leitungssystem 45 mit einem Energiespeicher 47 verbunden ist. Der Energiespeicher 47 ist wiederum mit einer Vorrichtung, die dazu ausgebildet ist, das Wärmetransportmedium im Kreislauf von einem jeweiligen ersten Temperaturniveau ein auf ein jeweiliges zweites Temperaturniveau zu transportieren, gekoppelt. Beispielsweise kann es sich bei der Vorrichtung 48 um einen Erdwärmespeicher, eine Wärmepumpe (z.B. eine Luft-Wasser-Wärmepumpe mit Außenluft, eine Sole-Wasser-Wärmepumpe mit Erdsonden oder Erdkollektoren, eine Wasser-Wasser-Wärmepumpe mit Grundwasser oder kalter Nah-/Fernwärme), einen Wärmetauscher, eine Übergabestation eines Firmennetzes oder eine verbrennungsbasierte Heizung (z.B. mit Pellets oder Gas oder anderen Brennstoffen) handeln.

Das Fenstermodul 1 bzw. eine Vielzahl von Fenstermodulen 1 können mit regenerativen Energien und niedrigen Vorlauftemperaturen betrieben werden, um das Gebäude bzw. jeweilige Nutzräume zu heizen, zu kühlen, zu beschatten und optional zu lüften. Ist die Vorrichtung 48 mit entsprechenden Speichern gekoppelt, so lässt sich der Energieverbrauch des Gebäudes 100 in Richtung eines Passiv-Hochhauses gehend dimensionieren.

Ein jeweiliges Fenstermodul 1 kann als Modul vorgefertigt werden, so dass in einer Gebäudefassade mit einer Vielzahl von Fenstermodulen die vorgefertigten Fenstermodule 1 angeordnet werden können. Die Konstruktion des Fenstermoduls 1 erlaubt jedoch auch die Gestaltung als Posten-Riegel-Fassade, so dass die oben beschriebenen Komponenten vor Ort in die jeweiligen Fenstermodule 1 eingebaut werden.

Das erfindungsgemäße Fenstermodul 1 kann in einer Vielzahl von Anwendungen und Konfigurationen zum Einsatz kommen, die nachfolgend kurz beschrieben werden:
Das Vorsehen einer lokalen Steuereinheit ermöglicht einen Stand-Alone-Betrieb eines jeweiligen Fenstermoduls. In Verbindung mit der zentralen Steuereinheit, die dem gesamten Gebäude, einem Gebäudeteil oder einem Nutzraum oder einer Gruppe von Nutzräumen zugeordnet sein kann, lässt sich auch eine integrierte Steuerung realisieren. Ein sich hieraus ergebender Vorteil besteht darin, dass eine Mehrzahl von Fenstermodulen beliebig miteinander kombiniert bzw. gruppiert werden kann. Bei Änderungen eines Raumkonzepts in einem Gebäude, z.B. einer Auftrennung großer Nutzräume in zwei kleinere Nutzräume, kann eine Gruppierung ohne Hardwareanpassung rein über Software erfolgen. Die Gruppierung erfolgt dabei über entsprechende Ansteuerung der Ventilantriebe eines jeweiligen Fenstermoduls. Die Vorgabewerte werden von der zentralen Steuereinheit anhand von Sensordaten eines oder mehrerer Sensoren des zu steuernde Nutzraums bereitgestellt.

Durch die getrennte Anordnung von Luft-Flüssigkeit-Wärmetauscher und Lüfter lässt sich eine höhere Effizienz bei der thermischen Regulierung des Gebäudes erzielen, da turbulente Strömungen vermieden werden können. Dies macht sich beim Betrieb des Fenstermoduls in einer verringerten Geräuschkulisse und geringeren Vibrationen und mechanischen Beanspruchungen der in dem Fenstermodul enthaltenen Komponenten bemerkbar.

Die Anordnung des Luft-Flüssigkeit-Wärmetauschers in dem Zwischenraum unten ermöglicht auf einfache Weise eine Kombination mit einer optionalen dezentralen Lüftung. Dabei ist es nicht erforderlich, jedes Fenstermodul mit einem eigenen dezentralen Lüftungsgerät, z.B. einem Pulslüftungsgerät, zu versehen. Es ist ausreichend, die dezentrale Lüftung pro Nutzraum oder - bei großen Nutzräumen - bei jedem n-ten Fenstermodul vorzusehen.

Die Kommunikation zwischen den lokalen Steuereinheiten jeweiliger Fenstermodule und der zentralen Steuereinheit erfolgt vorzugsweise über einen Datenbus, z.B. den bekannten Modbus. Dadurch ist es möglich, die Steuerung modular zu erweitern.

Über die Schnittstelle der lokalen Steuereinheit und/oder zentralen Steuereinheit können auch weitere Sequenzen im Raum angesteuert werden, wie z.B. eine Betonkernaktivierung oder dezentrale Lüftung.

Im Stand-Alone-Betrieb des Fenstermoduls erhält deren lokale Steuereinheit die Vorgabe, ob Wärme oder Kälte zur Verfügung steht, eine Soll- und Ist-Raumtemperatur sowie eine Freigabe des Fenstermoduls. Über einen Regler (z.B. PID-Regler) wird eine Ist-/Soll-Abweichung ausgeregelt. Als Aktoren des Regelkreises werden insbesondere die Drehzahl des Lüfters und die Stellung des Ventilantriebs des Luft-Flüssigkeit-Wärmetauschers angesteuert. Die Regelung erfolgt so lange, bis SollWerte und Ist-Werte angeglichen sind.

Die Leuchtmittel können den Arbeitsmodus der Fenstermodule signalisieren und psychologisch verstärken. Beispielsweise kann die Farbe Rot für einen Heizbetrieb, die Farbe Blau für einen Kühlbetrieb und die Farbe Grün für den Zustand "alles im Gleichgewicht" verwendet werden. Die Leuchtmittel können auch zusätzlich extern angesteuert werden, z.B. über ein Raumbediengerät des Nutzers oder über eine integrierte Gebäudeleittechnik.

Das Vorsehen der lokalen Steuereinheit, der zentralen Steuereinheit sowie einer Vielzahl von Sensoren in jeweiligen Fenstermodulen ermöglicht eine Fernwartungsmöglichkeit in Bezug auf eine Überwachung der Komponenten, eine Meldung von Sensorwerten, Betriebszuständen und Störungen sowie eine Indikation eines Wartungsfalls. Die Kommunikation entsprechender Daten (Aktor- und Sensorsignale) und Störmeldungen kann beispielsweise von der lokalen Steuereinheit an die zentrale Steuereinheit erfolgen.

Für etwaige Leckagen des Wärmetauschers und sonstige Wassereintritte in den Zwischenraum des Fenstermoduls ist der Leckagesensor am Boden des Zwischenraums, d.h. auf der Oberseite des unteren Rahmenelements, vorgesehen. Etwaige Wasseransammlungen werden durch den Leckagesensor an die lokale Steuereinheit übertragen, welche eine entsprechende Information an die zentrale Steuereinheit weiterleitet.

Durch die Überwachung der luftseitigen Eingangstemperatur am Luft-Flüssigkeit-Wärmetauscher kann ein Überhitzungsschutz der Komponenten bereitgestellt werden. Wenn das Fenstermodul betriebsbereit und im Betriebsmodus Kühlen betrieben wird, kann aktiv gegengesteuert werden. Andernfalls wird eine Störmeldungen an die zentrale Steuereinheit ausgegeben.

Ferner kann eine Plausibilitätsprüfung der Temperaturen am Luft-Flüssigkeit-Wärmetauscher erfolgen. Im Betriebsmodus "Heizen" muss die eingangsseitige Lufttemperatur kälter als die ausgangseitige Lufttemperatur sein. Im Betriebsmodus "Kühlen" ist dies umgekehrt. Demgegenüber muss im Betriebsmodus "Heizen" die wasserseitige Eingangstemperatur größer als die Ausgangstemperatur sein. Im Betriebsmodus "Kühlen" muss dies umgekehrt sein.

Ferner können Störmeldungen der Drehzahl des Lüfters von der lokalen Steuereinheit überwacht und an die zentrale Steuereinheit weiter kommuniziert werden.

Wenn das Fenstermodul freigegeben ist, wird eine Störmeldungen der Hydraulik generiert, wenn eine Abweichung durch eine Regelung festgestellt wird, und zwar im Hinblick auf eine positive oder negative Differenz von Temperaturen am Luft-Flüssigkeit-Wärmetauscher. Demgegenüber kann eine Betriebsmeldung ausgegeben werden, wenn das Fenstermodul korrekt arbeitet.

Ferner können Leistungskennzahlen an die zentrale Steuereinheit und eine Gebäudeleittechnik ausgegeben werden. Luftseitig sind dies eine Kennlinie des Lüfters, eine Drehzahl und eine Temperaturspreizung der Luft am Ein- und Austritt des Luft-Flüssigkeit-Wärmetauschers. Wasserseitig können eine Kennlinie des Ventils und des Luft-Flüssigkeit-Wärmetauschers sowie des Kühlmediums am Eintritt und Austritt des Luft-Flüssigkeit-Wärmetauschers abgegeben werden.

Einem Nutzraum ist zumindest ein erfindungsgemäßes Fenstermodul zugeordnet. Die lokalen Steuereinheiten des oder der Fenstermodule sind, vorzugsweise über die zentrale Steuereinheit, mit einem oder mehreren Sensoren (z.B. als Multi-Sensor) in dem Nutzraum verbunden. Typischerweise ist es ausreichend, pro Nutzraum einen Multi-Sensor vorzusehen. Bei sehr großen Räumen können pro Nutzraum auch mehrere Multi-Sensoren vorgesehen sein.

Der Multi-Sensor stellt Sensorwerte des Nutzraums als auch optional von externen Datenquellen an die zentrale Steuereinheit bereit. Er kann gleichzeitig Steuerinformationen für das oder die Fenstermodule in dem Nutzraum bereitstellen.

Der Multi-Sensor kann das Gateway für die Kommunikation mit externen Systemen, wie z.B. einer Gebäudeleittechnik, einer KI-Plattform, einer Prognoseeinheit, ausbilden. In einer anderen Ausgestaltung kann der Multi-Sensor auch die zentrale Steuereinheit ausbilden oder ersetzen. In dieser Ausgestaltung kann der Multi-Sensor als Raumbediengerät ausgeführt sein.

Der Sensor 33 kann auch die Schnittstelle zu einer Nutzerbedieneinheit sein.

Im Betrieb eines Gebäudes mit erfindungsgemäßen Fenstermodulen ergeben sich folgende Anwendungsfälle:
Ein Raum kann energieeffizient und energieflexibel betrieben werden.

Die Steuerung kann derart erfolgen, dass die Nutzung von natürlichem Licht maximiert wird. Dies kann durch die Winkelstellung der Lamellen einer Jalousie, dem Maß der Schließung der Sonnenschutzvorrichtung und dergleichen ermöglicht werden, ohne den Raum energetisch negativ zu beeinflussen. Hierzu ist es zweckmäßig, in dem Nutzraum einen Helligkeitssensor und eine Ansteuermöglichkeit für die Sonnenschutzvorrichtung vorzusehen.

Anhand einer Raumfeuchte kann eine Taupunktüberwachung erfolgen. Ist die Feuchte zu hoch, so wird die Soll-Raumtemperatur im Nutzraum angehoben. Eine Ansteuerung erfolgt dann für alle Fenstermodule des betreffenden Nutzraums.

### Bezugszeichenliste

- 1, 1N, 1S: Fenstermodul
- 2: Außenverglasung
- 3: Innenverglasung
- 4: Zwischenraum
- 4I: innerer Zwischenraum
- 4A: äußerer Zwischenraum
- 5: Luft-Flüssigkeit-Wärmetauscher
- 5G: Gehäuse des Luft-Flüssigkeit-Wärmetauschers
- 6: Leuchtmittel (unteres Lichtband)
- 7: Leuchtmittel (oberes Lichtband)
- 8: Leckagesensor
- 9: Lüftungskanal
- 10: Lüfter
- 10G: Lüftergehäuse
- 11: Sonnenschutzvorrichtung
- 12: Rahmen
- 120: oberes Rahmenelement
- 12U: unteres Rahmenelement
- 13: Verkleidungselement
- 19: Trennelement
- 20, 20S, 20N: lokale Steuereinheit
- 25: zentrale Steuereinheit
- 30: Nutzraum
- 31: Decke
- 32: Boden
- 33: Sensor (Multi-Sensor)
- 40, 40S, 40N: Zuleitung
- 41, 41S, 41N: Rückleitung
- 42: Ventil
- 43: Ventilantrieb
- 44: Energieversorgungsleitung
- 45: Leitungssystem
- 46: Umschalt- und Pumpvorrichtung
- 47: Energiespeicher
- 48: Vorrichtung
- 100: Gebäude
- H: Wärmefluss Kühlen
- K: Wärmefluss Heizen
- AS: Außenseite des Gebäudes
- IS: Innenseite des Gebäudes

## Patentansprüche

1. Fenstermodul (1) zur thermischen Regulierung, umfassend ein Beheizen oder Kühlen, eines Gebäudes, umfassend:
- eine Außenverglasung (2) und eine Innenverglasung (3), wobei die Au-ßenverglasung (2) einen kleineren Wärmedurchgangskoeffizient (Uₐ) als die Innenverglasung (3) aufweist, um über die Innenverglasung (3) das Gebäudeinnere thermisch zu regulieren, und wobei zwischen der Außenverglasung (2) und der Innenverglasung (3) ein gegenüber Feststoffen, insbesondere Staub, abgedichteter Zwischenraum (4) gebildet ist;
- einen Luft-Flüssigkeit-Wärmetauscher (5), der ein fluiddurchströmtes Kühl-/Heizelement mit einer Fluidleitung, in der ein Wärmetransportmedium geführt ist, umfasst, wobei der Luft-Flüssigkeit-Wärmetauscher (5) im Einbauzustand des Fenstermoduls (1) unten oder oben, horizontal liegend, in dem Zwischenraum (4) angeordnet ist, so dass er von Luft aus dem Zwischenraum (4) durchströmbar ist;
- einen Lüfter (10), der im Einbauzustand des Fenstermoduls (1) oben oder unten, horizontal liegend, in dem Zwischenraum (4) angeordnet ist und der in einem Kühlbetrieb und in einem Heizbetrieb als Betriebsmodi des Fenstermoduls betreibbar ist, wobei zumindest in dem Kühlbetrieb durch den Lüfter (10) Luft durch den Luft-Flüssigkeit-Wärmetauscher (5) geführt wird, um Wärme zwischen der Luft und dem Wärmetransportmedium auszutauschen und um die Luft in dem Zwischenraum (4) in einem Kreislauf zu führen;
- ein in dem Zwischenraum (4) angeordnetes Trennelement (19), das parallel zu der Außenverglasung (2) und der Innenverglasung (3) verläuft und den Zwischenraum (4) in einen inneren Zwischenraum (4I) und einen äußeren Zwischenraum (4A) unterteilt, um eine steigende und eine fallende Luftströmung in dem Zwischenraum (4) zu erzeugen; und
- eine steuerbar verstellbare Sonnenschutzvorrichtung (11) als Sonnenschutzfunktion, die in dem äußeren Zwischenraum (4A) angeordnet ist und an die Außenverglasung (2) grenzt, so dass bei aktivierter Sonnenschutzfunktion der äußere Zwischenraum (4A) vollständig oder im Wesentlichen zwischen der Sonnenschutzvorrichtung (11) und dem Trennelement (19) gebildet ist.

2. Fenstermodul nach Anspruch 1, **dadurch gekennzeichnet, dass** der Wärmedurchgangskoeffizient (Uₐ) der Außenverglasung (2) mindestens um den Faktor 3, insbesondere um den Faktor 5 oder grösser, kleiner als der Wärmedurchgangskoeffizient (Uᵢ) der Innenverglasung (3) ist.

3. Fenstermodul nach Anspruch 1 oder 2, **dadurch gekennzeichnet, dass** der zwischen der Außenverglasung (2) und der Innenverglasung (3) gebildete Zwischenraum (4) größer als 150 mm ist.

4. Fenstermodul nach einem der vorhergehenden Ansprüche, **dadurch gekennzeichnet, dass** durch das Trennelement (19) der aus dem Luft-Flüssigkeit-Wärmetauscher (5) austretende Luftstrom in den inneren Zwischenraum (4I) geführt wird, um über den äußeren Zwischenraum (4A) zurückgeführt zu werden.

5. Fenstermodul nach einem der vorhergehenden Ansprüche, **dadurch gekennzeichnet, dass** die Sonnenschutzvorrichtung (11) aus einem Sonnenstrahlung absorbierenden und reflektierenden Material ausgebildet ist, die derart steuerbar verstellbar ist, dass die Tageslichtstärke im Nutzraum einstellbar ist.

6. Fenstermodul nach einem der vorhergehenden Ansprüche, **dadurch gekennzeichnet, dass** das Trennelement (19) eine feststehende transparente Trennwand (15) umfasst, die sich ohne Zwischenraum über die gesamte Breite des Fenstermoduls erstreckt.

7. Fenstermodul nach einem der vorhergehenden Ansprüche, **dadurch gekennzeichnet, dass** die Innenverglasung (3) und das Trennelement (19) zum Gebäudeinneren hin öffenbar, insbesondere verschwenkbar, sind.

8. Fenstermodul nach einem der vorhergehenden Ansprüche, **dadurch gekennzeichnet, dass** das Trennelement (19) derart in dem Zwischenraum (4) angeordnet ist, dass der zwischen der Außenverglasung (2) und dem Trennelement (19) gebildete Zwischenraum größer ist als der zwischen der Innenverglasung (3) und dem Trennelement (19) gebildete Zwischenraum.

9. Fenstermodul nach einem der vorhergehenden Ansprüche, **dadurch gekennzeichnet, dass** das Trennelement (19) sich an einer Gehäusewand des Lüfters (10) und einem Gehäuse oder Verbindungselement des Luft-Flüssigkeit-Wärmetauscher (5) abstützt.

10. Fenstermodul nach einem der vorhergehenden Ansprüche, **dadurch gekennzeichnet, dass** der Zwischenraum (4) gegenüber dem konditionierten Nutzraum diffusionsoffen konstruiert ist.

11. Fenstermodul nach einem der vorhergehenden Ansprüche, **dadurch gekennzeichnet, dass** in dem Zwischenraum (4), insbesondere an dem Trennelement (19) oder an dieses angrenzend, und/oder außerhalb des Zwischenraums und angrenzend an die Innenverglasung (3) zumindest ein zur Abgabe von farbigem Licht ausgebildetes Leuchtmittel (6, 7) angeordnet ist, wobei durch die Farbe ein Arbeitsmodus des Fenstermoduls oder eine an einen Nutzer gerichtete Information signalisierbar ist.

12. Fenstermodul nach einem der vorhergehenden Ansprüche, **dadurch gekennzeichnet, dass** der Lüfter (19) ein drehzahlregelbarer Querstromventilator ist.

13. Fenstermodul nach einem der vorhergehenden Ansprüche, **dadurch gekennzeichnet, dass** der Luft-Flüssigkeit-Wärmetauscher (5) ein Rohrwärmetauscher, insbesondere ein Lamellenwärmetauscher, ist.

14. Fenstermodul nach einem der vorhergehenden Ansprüche, **dadurch gekennzeichnet, dass** in der Fluidleitung des Luft-Flüssigkeit-Wärmetauschers (5) eingangsseitig ein steuer- oder regelbares Ventil (42) angeordnet ist, wobei durch die Stellung des Ventils (42) ein Volumenstrom des Wärmetransportmediums durch den Luft-Flüssigkeit-Wärmetauscher (5) zwischen 0% und 100% einstellbar ist.

15. Fenstermodul nach einem der vorhergehenden Ansprüche, **dadurch gekennzeichnet, dass** dieses einen Rahmen (12) mit einem im Einbauzustand oberen Rahmenelement (120), einem unteren Rahmenelement (12U) sowie zwei das obere Rahmenelement (120) und das untere Rahmenelement (12U) verbindenden, insbesondere vertikalen, seitlichen Rahmenelementen (12L, 12R) umfasst, wobei in dem oder durch das untere Rahmenelement (12U) ein vom Fenstermodul thermisch isolierter und an ein dezentrales Lüftungsgerät, insbesondere ein Pulslüftungsgerät, anschließbarer Lüftungskanal (9), der das Gebäudeinnere mit dem Gebäudeäußeren verbindet, ausgebildet ist.

16. Fenstermodul nach Anspruch 15, **dadurch gekennzeichnet, dass** das untere Rahmenelement (12U) den Zwischenraum mit einem wannenförmigen Verkleidungselement (13) abschließt, um eine Luftumlenkung in dem Zwischenraum zu erzielen.

17. Fenstermodul nach Anspruch 15 oder 16, **dadurch gekennzeichnet, dass** der Lüftungskanal (9) unterhalb des wannenförmigen Verkleidungselements (13) oder seitlich neben dem wannenförmigen Verkleidungselement (13) angeordnet ist.

18. Fenstermodul nach einem der Ansprüche 14 bis 17, **dadurch gekennzeichnet, dass** dieses eine lokale Steuereinheit (20) umfasst, die dazu ausgebildet ist, zumindest einen Aktor des Fenstermoduls (1), umfassend einen Ventil-Stellmotor (43) und/oder einen Antrieb des Lüfters (10) und/oder einen Antrieb der Sonnenschutzvorrichtung (11), derart zu regeln und/oder steuern, dass ein empfangener Ist-Raumtemperaturwert (Tᵢₛₜ) einem vorgegebenen Soll-Raumtemperaturwert (Tₛₒₗₗ) entspricht.

19. Fenstermodul nach Anspruch 18, **dadurch gekennzeichnet, dass** dieses zumindest einen Sensor, umfassend jeweilige Temperatursensoren zur Erfassung der Temperaturen des Wärmetransportmediums am Eingang und/oder Ausgang der Fluidleitung des Luft-Flüssigkeit-Wärmetauschers (5) und/oder der Temperaturen der Luft am Eingang und/oder Ausgang des Luft-Flüssigkeit-Wärmetauschers (5), umfasst, wobei die Temperaturwerte zumindest der lokalen Steuereinheit (20) zur Verarbeitung für die Regelung und/oder Steuerung des zumindest einen Aktors bereitgestellt werden.

20. Fenstermodul nach Anspruch 18 oder 19, **dadurch gekennzeichnet, dass** die lokale Steuereinheit (20) eine Schnittstelle umfasst, an der sie zumindest den Ist-Raumtemperaturwert (Tᵢₛₜ) und den vorgegebenen Soll-Raumtemperaturwert (Tₛₒₗₗ) von einer zentralen Steuereinheit (25) des Gebäudes oder eines Gebäudeteils, empfängt.

21. Fenstermodul nach Anspruch 20, **dadurch gekennzeichnet, dass** die lokale Steuereinheit (20) von der zentralen Steuereinheit (25) an der Schnittstelle ein Steuersignal für den Antrieb der Sonnenschutzvorrichtung (11) empfängt.

22. Verfahren zur thermischen Regulierung eines Gebäudes mittels eines Fenstermoduls gemäß einem der vorhergehenden Ansprüche 1 bis 20,
bei dem:
- zumindest in dem Kühlbetrieb durch den zumindest einen Lüfter (10) Luft durch den zumindest einen Luft-Flüssigkeit-Wärmetauscher (5) geführt wird, um Wärme zwischen der Luft und dem Wärmetransportmedium auszutauschen und um die Luft in dem Zwischenraum (4) in einem Kreislauf zu führen;
- die Richtung, in der die Luft in dem Zwischenraum (4) in dem Kreislauf geführt wird, in dem Kühlbetrieb und dem Heizbetrieb gleich ist.

23. Kühl- und Heizsystem für Gebäude mit zumindest einem Fenstermodul gemäß einem der Ansprüche 1 bis 21, und mit einer eine Vorrichtung, die dazu ausgebildet ist, in zumindest einem Kreislauf ein Wärmetransportmedium von einem jeweiligen ersten Temperaturniveau auf ein jeweiliges zweites Temperaturniveau zu transportieren.
